# NEUE EUROPÄISCHE PATENTSCHRIFT

(11) **EP 0 416 275 B2**
(45) Veröffentlichungstag und Bekanntmachung des Hinweises auf die Entscheidung über den Einspruch: **25.06.1997**
(45) Hinweis auf die Patenterteilung: 01.09.1993
(21) Anmeldenummer: 90114538.3
(22) Anmeldetag: 28.07.1990
(51) Int. Cl.: G01B 21/32

(54) **Mit einem langgestreckten Maschinenteil, insbesondere dem Schaberbalken einer Beschichtungsvorrichtung, fest verbundene Einrichtung zur Messung von Verbiegungen**
Device for the measurement of deformations rigidly fixed to a long straggling machine piece, especially the scraper beam of a coating device
Dispositif de mesure de déformation fixé sur une pièce de machine allongée, en particulier la poutre de raclage d'un dispositif de couchage

(30) Priorität: 05.09.1989 DE 3929458
(43) Veröffentlichungstag der Anmeldung: 13.03.1991
(73) Patentinhaber: JAGENBERG Aktiengesellschaft, D-40476 Düsseldorf (DE)
(72) Erfinder: Knop, Reinhard, D-4630 Bochum 6 (DE)
(74) Vertreter: Thul, Hermann, Dipl.-Phys.

(56) Entgegenhaltungen:
- DE-A- 2 409 521
- DE-A- 3 340 298
- US-A- 4 213 245

## Beschreibung

Die Erfindung betrifft einen Schaberbalken einer Beschichtungsvorrichtung für Materialbahnen, z.B. Papier- oder Kartonbahnen, mit einer mit diesem fest verbundenen Meßeinrichtung.

Bei den bekannten Beschichtungsvorrichtungen für Papier- oder Kartonbahnen mit einem elastischen Schabermesser als Dosierelement, das an einem sich über die Arbeitsbreite erstreckenden Schaberbalken befestigt ist, führen Verbiegungen des Schaberbalkens zu Unregelmäßigkeiten im Strichbild und nicht reproduzierbaren Streichergebnissen. Verbiegungen des Schaberbalkens treten z.B. als Durchbiegung aufgrund des Eigengewichts oder durch Temperaturänderungen während des Betriebs auf.

Aus der DE-PS 28 25 907 ist eine Streicheinrichtung bekannt, bei der das an einem schwenkbaren Schaberbalken befestigte Schabermesser von einer Abstützleiste abgestützt wird, die entlang der Unterstützungslinie mit Zug- und Druckschrauben einjustiert werden kann. Auf diese Weise lassen sich zu Beginn des Beschichtungsvorgangs geometrische Fehler in der Schabermessereinspannung bzw. -abstützung, die zu einer Änderung der Schabermessergeometrie bzw. -anpressung und damit des Strichgewichts führen, kompensieren. Eine direkte Messung der Verbiegung des Schaberbalkens und damit eine automatisierte Fehlerkompensation vor oder während des Betriebs ist nicht möglich.

Aus der DE-A1-33 40 298 und der US-PS 4,213,245 sind auf ein Meßobjekt aufsetzbare Meßeinrichtungen zur Bestimmung von Oberflächenprofilen bekannt, die ein geradlinig frei eingespanntes Band als Gerad - und Ebenheitsnormal, und einer entlang des Bands verfahrebare, die Oberfläche des Meßobjekts abtastende Meßfühler aufweisen.

Die DE-OS 24 09 521 beschreibt einen Stoffauflauf für Papiermaschinen mit einem Auslaufspalt, der durch eine Unterlippe und eine verstellbare Oberlippe begrenzt ist. Oberhalb der Oberlippe ist zwischen den Seitenwänden eines mit der Oberlippe verbundenen Trägers ein Seil bespannt, das nach einer Ausführungsform mit seinem einen Ende an einer Feder befestigt ist. Zwischen dem Seil und der Oberlippe bzw. deren Träger ist eine berührungslos arbeitende Meßeinrichtung angeordnet, die den Abstand zwischen dem Seil und der Oberlippe mißt.

Der Erfindung liegt die Aufgabe zugrunde, eine Meßeinrichtung für den Schaberbalken einer Beschichtungsvorrichtung zu schaffen, mit der sich zu Unregelmäßigkeiten im Strichbild und nicht reproduzierbaren Streichergebnissen führende Verbiegungen des Schaberbalkens kontinuierlich während des Betriebs messen lassen.

Diese Aufgabe wird mit den Merkmalen des Patentanspruchs 1 gelöst.

Das eingespannte Band bleibt auch bei Verbiegungen des Schaberbalkens geradlinig und dient so als gerade Bezugslinie für den von der Verbiegung bewegten Meßfühler.

Die Unteransprüche enthalten bevorzugte, da besonders vorteilhafte Ausgestaltungen der Erfindung.

Bei der Ausgestaltung nach Anspruch 2 sind das Band und der Meßfühler gegen Verschmutzungen, die das Meßergebnis negativ beeinflussen würden, abgedichtet.

Während das Merkmal des Anspruchs 3 eine Einstellung verschiedener Meßrichtungen ermöglicht, läßt sich bei der Ausgestaltung nach Anspruch 4 eine Vorspannung einstellen, die ein Durchhängen des Bandes aufgrund des Eigengewichts minimiert.

Die Ausgestaltung nach Anspruch 5 ermöglicht den Einsatz der Meßeinrichtung an Maschinenteilen, die während des Betriebs vibrieren.

Die Zeichnung dient zur Erläuterung der Erfindung anhand eines vereinfacht dargestellten Ausführungsbeispiels.

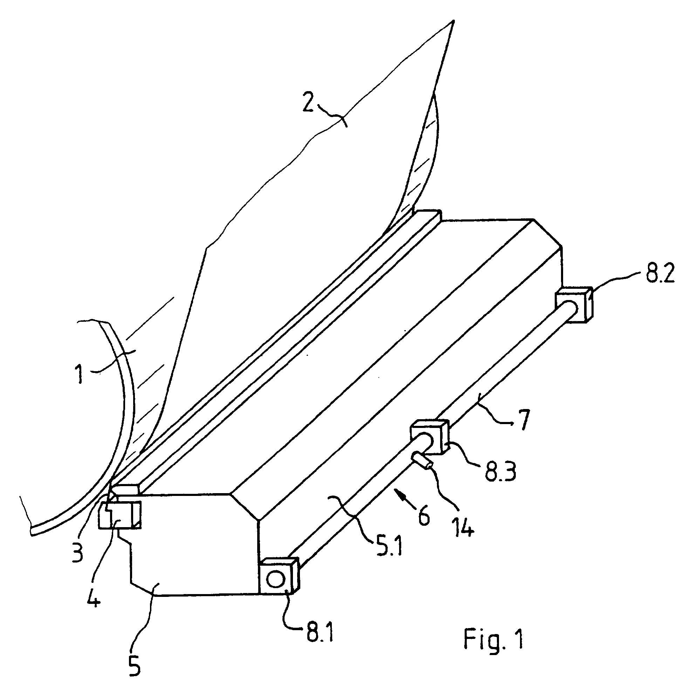

Es zeigen:
Fig. 1:
   Schematisch eine perspektivische Darstellung eines Schaberbalkens mit der erfindungsgemäßen Meßeinrichtung,
Fig. 2:
   einen in etwa waagerechten Längsschnitt durch die Meßeinrichtung nach Fig. 1.

Das in Fig. 1 dargestellte Dosiersystem ist Teil einer Vorrichtung zum Beschichten einer um eine Gegenwalze 1 geführten Materialbahn 2, insbesondere einer Papier- oder Kartonbahn. Auf die Bahn 2 wird von einem nicht dargestellten Auftragwerk Beschichtungsmaterial, z.B. Streichfarbe, im Uberschuß aufgebracht und von dem Dosiersystem auf das gewünschte Strichgewicht dosiert.

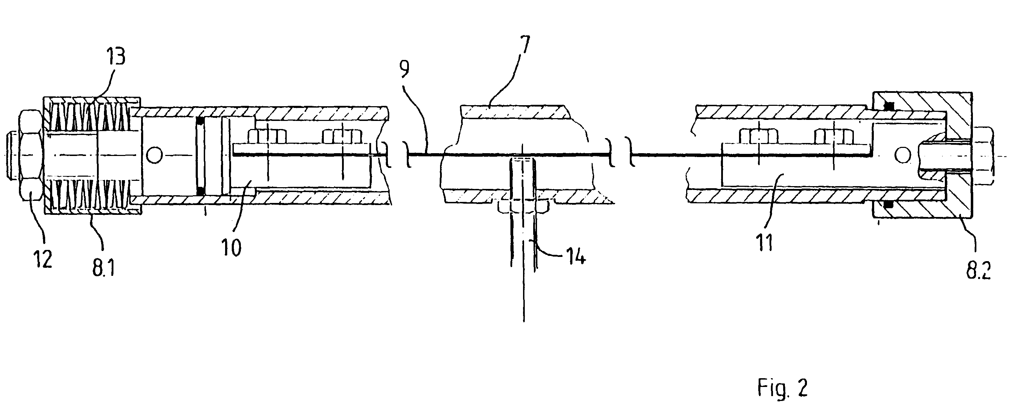

Als Dosierelement enthält das Dosiersystem ein Schabermesser 3, das mit seiner Spitze an der Bahn 2 anliegt und mit seinem Fuß in einem Klemmbalken 4 befestigt ist. Der Klemmbalken 4 ist verschiebbar in einem Schaberbalken 5 gelagert, der zur Einstellung eines bestimmten Balkenwinkels (= Winkel zwischen der Tangente an die Gegenwalze und dem unverformten Schabermesser 3) schwenkbar in einem seitlichen Gestell aufgehängt ist Zur Einstellung eines bestimmten Strichgewichts kann das Schabermesser 3 durch Verschieben des Klemmbalkens 4 unter die entsprechende Vorspannung gesetzt werden. Soweit ist das Dosiersystem bekannt und z.B. in der DE-PS 28 25 907 beschrieben. Um die die Schabermesservorspannung am meisten beeinflussende Verformung des Schaberbalkens 5 in Richtung zum Schabermesser 3 - also radial zur Gegenwalze 1 - zu messen, ist an der rückwärtigen Wand 5.1 des Schaberbalkens 5 eine sich über die Arbeitsbreite erstreckende Meßeinrichtung 6 angeordnet, die in Fig. 2 detaillierter dargestellt ist. Die Meßeinrichtung besteht aus einem Rohr 7, das mittels Halter 8.1 - 8.3 an der rückwärtigen Wand 5.1 befestigt ist. Die Halter 8.1, 8.2 sind an beiden seitlichen Enden, der Halter 8.3 etwa in der Mitte des Schaberbalkens 5 angeordnet. Sie übertragen eine Verbiegung des Schaberbalkens 5 auf das Rohr 7. Innerhalb des Rohres 7 ist ein Band 9 aus Federstahl angeordnet, das von Befestigungselementen 10,11 an beiden Rohrenden geradlinig gespannt gehalten wird. Das Befestigungselement 10 an einem Rohrende ist mittels einer Stellschraube 12 gegen die Kraft einer Tellerfeder 13 nach außen verschiebbar gelagert. Damit läßt sich eine Vorspannung des Bandes 9 einstellen, so daß der Durchhang des Bandes 9 aufgrund des Eigengewichts bei jeder Position vernachlässigbar klein ist. Das Band 9 dient als gerade Bezugslinie.

In der Mitte des Rohres 7 ist an der Rohrwand ein handelsüblicher, berührungslos arbeitender Meßfühler 14 befestigt, der bis in die Nähe der Breitseite des Bandes 9 reicht und ein seinem Abstand von diesem proportionales Signal abgibt.

Bei einer Verbiegung des Schaberbalkens 5 wird das Rohr 7 entsprechend mitverbogen, wobei das frei im Rohr 7 eingespannte Band 9 geradlinig bleibt. Dadurch ändert sich der Abstand des Meßfühlers 14 vom Band 9; diese Abstandsänderung wird vom Meßfühler 14 registriert.

Das Rohr 7 mit dem Band 9 ist in den Halterungen 8.1 - 8.3 drehbar gelagert, um die Meßrichtung ändern zu können, da der Meßfühler 14 nur Abstandsänderungen in die Richtung aufnimmt, die senkrecht zur Breitseite des Bandes 9 erfolgen.

Beim Einsatz an Maschinenteilen, die während des Betriebs vibrieren, ist das Rohr 7 mit einer Flüssigkeit gefüllt, die Schwingungen des Bandes 9 dämpft. Das Rohr 7 schützt sowohl den Meßfühler 14 als auch das Federband vor unzulässigen äußeren Einflüssen, wie z.B. vor Verschmutzungen, die bei Beschichtungsvorrichtungen durch überlaufende Streichfarbe o.ä. auftreten.

Beim Einsatz an Maschinenteilen, die keine störenden Schwingungen erzeugen und keinen Verschmutzungen ausgesetzt sind, kann das Band 9 auch ohne das Rohr 7 direkt an dem Maschinenteil befestigt werden. Ebenso ist es möglich, bei Bedarf zwei um 90° verdrehte Meßeinrichtungen anzuordnen, um so gleichzeitig Verbiegungen in zwei Richtungen messen können.

Beim Einsatz an einem Schaberbalken einer Beschichtungs- vorrichtung wird die Meßeinrichtung 6 bevorzugt eingesetzt, um vor Produktionsbeginn den Schaberbalken 5 exakt gerade auszurichten. So erübrigt sich eine aufwendige Kompensation von Fehlern in der Strichgewichtsverteilung über eine Vielzahl von Stellschrauben, die auf die Abstützleiste einwirken. Während des Betriebs mißt die Meßeinrichtung 6 auftretende Verbiegungen des Schaberbalkens 5 kontinuierlich und liefert so ein Signal, mit dem automatisch betätigte Kompensationseinrichtungen gesteuert werden können.

## Patentansprüche

1. Schaberbalken (5) einer Beschichtungsvorrichtung für Materialbahnen (2) in Verbindung mit einer mit dem Schaberbalken (5) fest verbundenen Einrichtung zur Messung von Verbiegungen des Schaberbalkens (5) mit folgenden Merkmalen:
- Mit Abstand von dem Schaberbalken (5) ist ein geradlinig frei eingespanntes Band (9) angeordnet, das in Längsrichtung elastisch verformbar oder federnd gelagert und nur mit seinen eingespannten Enden mit dem Schaberbalken (5) fest verbunden ist,
- zwischen den beiden Enden des Bandes (9) ist ein mit dem Schaberbalken (5) direkt oder indirekt fest verbundener, eine Abstandsänderung zum Band (9) messender Meßfühler (14) angeordnet, und
- die Meßeinrichtung (6) ist so angeordnet, daß eine Verbiegung des Schaberbalkens (5) in Richtung senkrecht zur Breitseite des Bandes (5) gemessen wird.

2. Einrichtung nach Anspruch 1, **dadurch gekennzeichnet**, daß das Band (9) in einem Rohr (7) frei eingespannt ist, wobei das Rohr (7) zumindest an seinen beiden Enden und in der Mitte an dem Maschinenteil befestigt ist, und daß der Meßfühler (14) in der Nähe des mittleren Befestigungspunktes an dem Rohr (7) befestigt ist.

3. Einrichtung nach Anspruch 2, **dadurch gekennzeichnet**, daß das Rohr (7) in Haltern (8.1 - 8.3) an dem Maschinenteil drehbar befestigt ist.

4. Einrichtung nach Anspruch 1 oder 2, **dadurch gekennzeichnet**, daß ein Einspannende des Bandes (9) in Längsrichtung gegen die Kraft einer einstellbaren Feder ( 13) verschiebbar gelagert ist.

5. Einrichtung nach Anspruch 2 oder 3, **dadurch gekennzeichnet**, daß das Rohr (7) mit einer schwingungsdämpfenden Flüssigkeit gefüllt ist.

## Claims

1. Doctor blade carrier (5) of a coating apparatus for webs of material (2) in conjunction with a device for measuring bendings of the doctor blade carrier (5), which device is firmly connected to the doctor blade carrier (5), having the following features:
- a band (9) freely clamped in a straight line is arranged at a distance from the doctor blade carrier (5), is mounted elastically deformably or resiliently in the longitudinal direction and is firmly connected to the doctor blade carrier (5) only by its clamped ends,
- a measuring sensor (14), which is firmly connected directly or indirectly to the doctor blade carrier (5) and measures a change in distance with respect to the band (9), is arranged between the two ends of the band (9), and
- the measuring device (6) is arranged such that a bending of the doctor blade carrier (5) in the direction perpendicular to the broad side of the band (9) is measured.

2. Device according to Claim 1, characterised in that the band (9) is freely clamped in a tube (7), the tube (7) being fastened on the machine part at least at its two ends and in the centre, and in that the measuring sensor (14) is fastened on the tube (7) in the vicinity of the central fastening point.

3. Device according to Claim 2, characterised in that the tube (7) is fastened rotatably in holders (8.1 - 8.3) on the machine part.

4. Device according to Claim 1 or 2, characterised in that one clamped end of the band (9) is mounted displaceably in the longitudinal direction against the force of an adjustable spring (13).

5. Device according to Claim 2 or 3, characterised in that the tube (7) is filled with an oscillation-damping fluid.

## Revendications

1. Barre de racloir (5) d'un dispositif d'enduction de bandes de matériau (2) en relation avec une installation solidaire de la barre de racloir (5) pour mesurer des déformations de la barre de racloir (5), caractérisée en ce
- qu'un ruban (9) droit fixé librement est disposé à une certaine distance de la barre de racloir (5), ce ruban étant placé élastiquement ou de manière élastiquement déformable dans la direction longitudinale et n'étant solidaire de la barre de racloir (5) qu'à ses extrémités fixées,
- qu'entre les deux extrémités du ruban (9), est disposé un détecteur (14) solidaire directement ou indirectement de la barre de racloir (5) et mesurant une variation de distance par rapport au ruban (9), et
- que l'installation de mesure (6) est disposée de manière à mesurer une déformation de la barre de racloir (5) dans la direction perpendiculaire à la largeur du ruban (9).

2. Installation suivant la revendication 1, caractérisée en ce que le ruban (9) est fixé librement dans un tube (7), le tube (7) étant fixé au moins à ses deux extrémités et en son milieu à la pièce de machine, et en ce que le détecteur (14) est fixé au tube (7) à proximité du point de fixation central.

3. Installation suivant la revendication 2, caractérisée en ce que le tube (7) est fixé en rotation dans des supports (8.1 - 8.3) à la pièce de machine.

4. Installation suivant la revendication 1 ou 2, caractérisée en ce qu'une extrémité de fixation du ruban (9) est placée de façon à pouvoir coulisser dans la direction longitudinale à l'encontre de la force d'un ressort ajustable (13).

5. Installation suivant la revendication 2 ou 3, caractérisée en ce que le tube (7) est rempli d'un liquide amortissant les oscillations.
